(19) Europäisches Patentamt
European Patent Office
Office européen des brevets

(11) **EP 0 946 015 B1**

(12) **EUROPÄISCHE PATENTSCHRIFT**

(45) Veröffentlichungstag und Bekanntmachung des Hinweises auf die Patenterteilung:
**17.10.2007  Patentblatt 2007/42**

(51) Int Cl.:
***H04L 1/20*** (2006.01)

(21) Anmeldenummer: **98810269.5**

(22) Anmeldetag: **27.03.1998**

(54) **Verfahren und Vorrichtung zur Beurteilung der Übertragungsqualität**

Method and system for estimating transmission quality

Procédé et dispositif d'estimation de la qualité de transmission

(84) Benannte Vertragsstaaten:
**AT BE CH DE DK ES FI FR GB GR IE IT LI LU NL PT SE**
Benannte Erstreckungsstaaten:
**RO**

(43) Veröffentlichungstag der Anmeldung:
**29.09.1999  Patentblatt 1999/39**

(73) Patentinhaber: **Ascom (Schweiz) AG**
**3000 Bern 14 (CH)**

(72) Erfinder: **Juric, Pero**
**4512 Bellach (CH)**

(74) Vertreter: **Roshardt, Werner Alfred et al**
**Keller & Partner**
**Patentanwälte AG**
**Schmiedenplatz 5**
**Postfach**
**3000 Bern 7 (CH)**

(56) Entgegenhaltungen:
**EP-A- 0 644 674**

• **SHIHUA WANG ET AL: "AN OBJECTIVE MEASURE FOR PREDICTING SUBJECTIVE QUALITY OF SPEECH CODERS" IEEE JOURNAL ON SELECTED AREAS IN COMMUNICATIONS, Bd. 10, Nr. 5, Juni 1992, Seiten 819-829, XP000274717**

## Beschreibung

## Technisches Gebiet

Die Erfindung betrifft ein Verfahren zur Durchführung einer Qualitätsbeurteilung einer Signalübertragungsstrecke mit nichtlinearen Verzerrungen, wobei ein vorgegebenes Testsignal von einem Sender zu einem Empfänger übertragen wird, im Empfänger zunächst der Pegel des Empfangssignals eingestellt und anschliessend mit einem vorgegebenen Vergleichsverfahren eine globale Qualitätsbeurteilung durchgeführt wird.

## Stand der Technik

Mit der zunehmenden Verbreitung der Mobilfunktelefonie und der Konkurrenz unter den verschiedenen Netzwerkbetreibern kommt der objektiven Messung der Übertragungsqualität von Sprachsignalen immer mehr Bedeutung zu. Es gibt unterschiedliche Methoden zur Messung der Übertragungsqualität. Von besonderem Interesse sind dabei jene, welche die Eigenschaften des menschlichen Gehörs berücksichtigen und eine automatische Qualitätsbeurteilung ermöglichen, welche mit der subjektiven Wahrnehmung einer Testperson im Wesentlichen übereinstimmt (vgl. z.B. Shihua Wang et. al., "An Objective Measure for Predicting Subjective Quality of Speech Coders", IEEE Journal on Selected Areas in Communications, Vol. 10 No. 5, Juni 1992, pp. 819-829 oder EP 0 722 164 A1).

Alle Verfahren für die Qualitätsbeurteilung basieren auf einem Vergleich des unverzerrten Testsignals mit dem durch die Übertragung verzerrten Empfangssignal. Voraussetzung für einen aussagekräftigen Vergleich ist bekanntlich die korrekte Abstimmung des Pegels des empfangenen Signals auf denjenigen des unverzerrten Testsignals.

Aus der EP 0 644 674 A2 ist ein Verfahren zur Beurteilung der Übertragungsqualität einer Sprach-Übertragungsstrecke anhand einer übertragenen, vorgegebenen Testsequenz bekannt. Die (synchronisierte) Testsequenz wird in eine Vielzahl von Zeitintervallen zerlegt, wobei für jedes Zeitintervall die lautmässigen Eigenschaften digitalisiert und ein entsprechender Zwischenwert gebildet wird. Mit Hilfe eines neuronalen Netzes wird die Übertragungsqualität anhand der Gesamtheit der Zwischenwerte als gut, mittel oder schlecht bewertet.

Die bisher bekannten Methoden für eine schnelle Echtzeit-Steuerung des Signals (vgl. z.B. ITU-T Recommendation P.52) lassen die Auswirkungen der Verzerrungen auf die Bestimmung des korrekten Pegels weitgehend ausser Acht. Zur Erläuterung der Problematik Folgendes:

Während der Messung der Übertragungsqualität eines Mobilfunksystems wird mit einem mobilen Testgerät das zu prüfende Gebiet durchfahren mit dem Ziel, eine mehr oder weniger flächendeckende Analyse der Funkversorgung zu erhalten. Es ist ein bekanntes Phänomen, dass Mobilfunkkanäle mit zeit- und frequenzselektivem Schwund behaftet sind, und dass die Übertragungsqualität infolgedessen sehr schnell und stark variieren kann. Echtzeit-Messungen im Feld sind also mit stark variierenden Signalpegeln (und mit nichtlinearen Störungen) konfrontiert, welche nicht im Voraus bekannt sind.

Die bekannten Methoden zur Pegelregelung erweisen sich als nicht befriedigend, wenn starke Signalverzerrungen vorhanden sind. Starke Störungen (Echo, Impulsstörungen, Verbindungsunterbrüche) werden nämlich unbewusst als Bestandteile des Signals interpretiert und können zu einer überhöhten bzw. zu kleinen Verstärkung führen. Als Folge davon wird das Ergebnis der Qualitätsbeurteilung verfälscht.

## Darstellung der Erfindung

Aufgabe der Erfindung ist es, ein Verfahren der eingangs genannten Art anzugeben, das die beim Stand der Technik vorhandenen Nachteile vermeidet und auch bei starken nichtlinearen Verzerrungen im wesentlichen keinen störenden Einfluss auf das Resultat der Qualitätsbeurteilung hat.

Die Lösung der Aufgabe ist durch die Merkmale des Anspruchs 1 definiert. Gemäss der Erfindung wird das empfangene Signal für die Pegelregelung nur in einigen ausgewählten zeitlichen Fenstern untersucht. Die genannten Fenster sind im voraus so festgelegt, dass sie eine möglichst hohe spektrale Energiedichte des (nicht verzerrten) Testsignals beinhalten. In den ausgewählten Fenstern wird das verzerrt empfangene Signal einem Vergleich mit dem Signalmuster unterzogen. Das Vergleichsverfahren ist dasselbe, welches auch nachträglich für die Beurteilung der Übertragungsqualität verwendet wird. Als nächstes wird das Fenster ermittelt, in welchem die beste Übertragungsqualität bzw. Signalähnlichkeit gefunden wurde. In diesem Fenster wird nun in an sich bekannter Weise das Verhältnis der Signalpegel ermittelt. Schliesslich wird das gesamte Signal (d.h. auch das Signal ausserhalb der untersuchten Fenster) entsprechend dem gefundenen Verhältnis verstärkt.

Der Kern der Erfindung liegt darin, dass für die Ermittlung des für die Pegelregelung erforderlichen Verstärkungsfaktors nicht auf die gesamte empfangene Signalenergie zurückgegriffen wird, sondern nur auf diejenigen Signalabschnitte, welche eine minimale Verzerrung aufweisen. Innerhalb der Pegelregelung wird quasi eine erste Beurteilung der Übertragungsqualität durchgeführt. Diese Beurteilung beschränkt sich aber auf Signalabschnitte (Fenster) mit einer hohen Energiedichte. Dadurch kann der Einfluss von allfälligen Störungen von vornherein klein gehalten werden. Die Störungen werden nicht in allen Fenstern gleich gross sein. Dort wo sie klein sind, wird die provisorisch ermittelte "lokale" Signalqualität gut sein. Entsprechend wird der "lokal" ermittelte Verstärkungsfaktor nur minimal durch nichtlineare Störungen tangiert.

Die für die Pegelregelung zu definierenden Fenster werden durch eine Analyse des vorgegebenen Testsignals festgelegt. Das Testsignal wird einer spektralen Analyse unterworfen. Dabei werden die Signalabschnitte identifiziert, deren Energie eine geeignet gewählte Schwelle überschreitet.

Vorzugsweise wird die Schwelle so gewählt, dass die Fenster bzw. Signalabschnitte, welche die geforderte Bedingung erfüllen, insgesamt mindestens 50% der Energie des gesamten Signals beinhalten. Bei Testsignalen mit stark lokal konzentrierter Energie kann die Schwelle ohne weiteres so gelegt werden, dass mindestens 2/3 bis 3/4 (z.B. etwa 70%) der gesamten Signalenergie in die ausgewählten Fenster fallen.

Im Bereich der Mobilfunktelefonie wird vorzugsweise ein Sprachsignal (z.B. ein von einer Testperson gesprochener Satz) als Testsignal verwendet. Die Fenster werden so gewählt, dass sie keine Sprechpausen enthalten. Von Interesse sind nur sprachaktive Signalausschnitte.

Eine geeignete Methode zur Bestimmung der Signalqualität ist die Berechnung der BSD (Bark Spectral Distance). Es können aber ohne weiteres auch andere Verfahren eingesetzt werden (Cepstral, etc.). Indem bei der Bestimmung des Verstärkungsfaktors für die selektierten Signalabschnitte dasselbe Qualitätsbeurteilungsverfahren eingesetzt wird wie bei der nachfolgenden Analyse des gesamten Signals, wird eine optimale Aufbereitung bzw. Vorverarbeitung des (verzerrten) Empfangssignals erreicht.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1    Ein Blockschaltbild des Verfahrens zur Beurteilung der Übertragungsqualität;

Fig. 2a-c    eine schematische Darstellung der Auswahl der für die Pegelregelung massgeblichen Fenster;

Fig. 3    ein Blockschaltbild des Verfahrens zur Durchführung der Pegelregelung.

Grundsätzlich sind in den Figuren gleiche Teile mit gleichen Bezugszeichen versehen.

**Wege zur Ausführung der Erfindung**

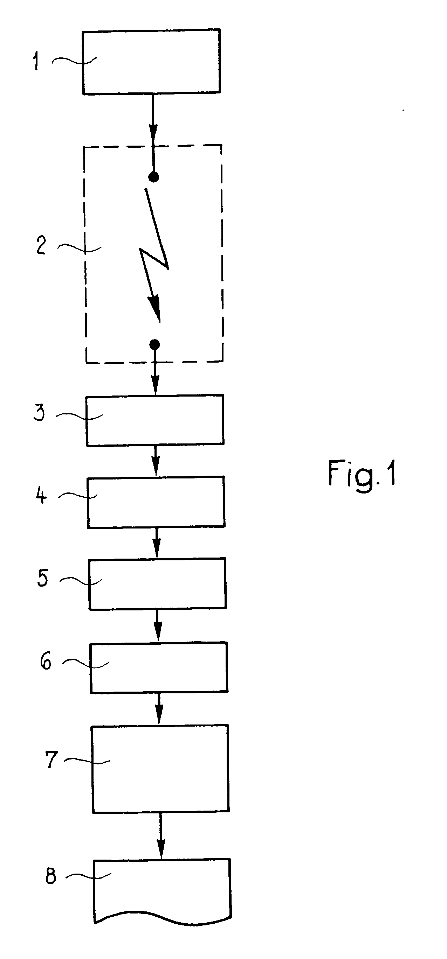

Fig. 1 zeigt schematisch den an sich bekannten Ablauf eines Verfahrens zur Beurteilung der Übertragungsqualität. Ein Sender 1 sendet ein im voraus bekanntes Testsignal. Der Sender 1 ist z.B. ein Testgerät, welches einerseits die Schaltungsanordnung eines handelsüblichen Mobilfunktelefons und andererseits eine Schaltung zum Erzeugen und Einspeisen des Testsignals in die Mobilfunkschaltung umfasst. Beim Testsignal handelt es sich z.B. um ein mehrfach wiederholtes Sprachsignal. Dieses ist in einem Speicher abgespeichert und wird digital an die Mobilfunkschaltung weitergegeben. Auf diese Weise wird ein Mobilfunkbenutzer simuliert, welcher mit einem Gesprächspartner am anderen Ende der Leitung spricht.

Das Testsignal wird über die Übertragungsstrecke 2 übertragen. Geht es um die Beurteilung der Übertragungsqualität eines Mobilfunksystems, dann schliesst die Übertragungsstrecke sowohl eine oder mehrere Funkstrecken als auch eine beliebige Anzahl von leitungsgebundenen Übertragungsabschnitten ein. Mindestens eine der Funkstrecken (z.B. diejenige von der jeweils aktuellen Basisstation zum Testgerät) ist starken nichtlinearen Verzerrungen unterworfen. Namentlich können kurze Unterbrechungen auftreten, wodurch entsprechende Abschnitte des Testsignals verloren gehen.

Am anderen Ende der Übertragungsstrecke 2 befindet sich der Empfänger 3. Dieser umfasst wiederum eine Telefonschaltung, um das Übertragungssignal zu decodieren und in einem digitalen Format für die nachfolgende Auswertung auszugeben. Weiter führt er die Synchronisation durch, damit die nachfolgende Signalverarbeitung auf den Beginn des (repetitiv übertragenen) Sprachsignals synchronisiert ist.

In Fig. 1 ist der Einfachheit halber nur die eine Richtung der Signalübertragung dargestellt. Es versteht sich, dass in der umgekehrten Richtung dieselbe Funktionalität gegeben sein kann, so dass die Übertragungsqualität in beiden Richtungen ermittelt werden kann.

Nach dem Empfänger 3 wird z.B. eine FFT-Analyse 4 (Fast Fourier Transform) durchgeführt. Die resultierenden Spektren werden danach einer Bark-Klassifikation 5 unterworfen. Das heisst, die Frequenzen werden entsprechend der Bark-Skala zu Gruppen bzw. Bändern zusammengefasst, welche mit der Empfindlichkeit des menschlichen Ohrs korrespondieren.

Das so aufbereitete Empfangssignal wird als nächstes mit der erfindungsgemässen Pegelregelung 6 auf das für die nachfolgende Qualitätsbeurteilung 7 erforderliche Niveau angehoben. Für die Qualitätsbeurteilung kann ein beliebiges Vergleichsverfahren eingesetzt werden, wobei die im Rahmen der Systementwicklung aus dem Testsignal in gleicher Weise gewonnenen Werte als Referenz in einem Speicher abgelegt sind. Die Ausgabe 8 der Qualitätsbeurteilung 7 kann z.B. die Abhängigkeit der ermittelten Qualitätswerte von der Zeit anzeigen. Nachdem bekannt ist, wo sich das mobile Testgerät zu einem bestimmten Zeitpunkt aufgehalten hat, kann beispielsweise auf örtliche Probleme der Funkstrecke geschlossen werden.

Im folgenden sollen nun die Grundlagen der erfindungsgemässen Pegelregelung 6 erläutert werden.

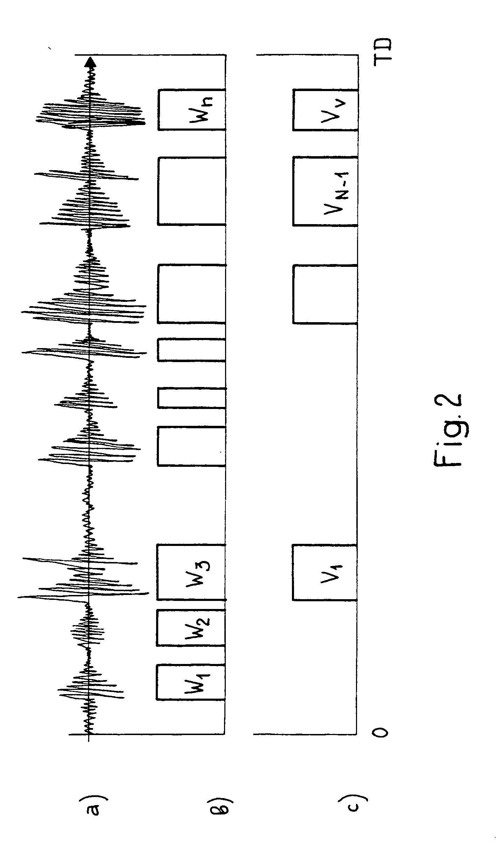

In Fig. 2a ist andeutungsweise der zeitliche Verlauf eines als Testsignal dienenden Sprachsignals gezeigt. Das Sprachsignal hat eine vorgegebene Länge TD von z.B. 3 bis 10 Sekunden. Charakteristisch für das Sprachsignal ist, dass die Energie nicht gleichmässig verteilt ist, sondern sich an den Wort- und Silbenanfängen konzentriert. Die Wörter sind durch Sprechpausen getrennt. Erfahrungsgemäss machen die Sprechpausen einen wesentlichen Teil (z.B. 30% bis 50%) der Länge TD des Sprachsignals aus.

In einem ersten Schritt werden nun die Sprechpausen geortet, welche die sprachaktiven Signalabschnitte voneinander trennen. Zu diesem Zweck kann das Signal in den Frequenzbereich transformiert und mit einem Diskriminator mit einer vorgegebenen Schwelle (welche z.B. 10 dB oberhalb des Quantisierungsrauschens liegt) verarbeitet werden. Das Ergebnis dieser Auswertung ist eine Reihe von beanstandeten, sprechpausenfreien Fenstern W1, W2, W3, ..., Wn (Fig. 2b).

Als nächstes werden die Fenster identifiziert, in denen z.B. die spektrale Energiedichte des Signals eine gewisse Schwelle überschreitet. Die Energiedichte wird im Frequenzbereich (insbesondere auf der Basis der Bark-Klassifikation) ermittelt. Vorzugsweise werden die Fenster nach der Grösse der Energiedichte sortiert. Auf diese Weise kann zugleich festgestellt werden, wieviele Fenster den gesetzten Schwellenwert überschreiten und wie gross die Summe der Energie der ausgewählten Fenster im Verhältnis zur Gesamtenergie des Testsignals ist.

Gemäss einer besonders bevorzugten Ausführungsform wird nämlich die Schwelle so gewählt, dass die oberhalb der Schwelle liegenden Fenster mindestens 60% bis 70% der Gesamtenergie vertreten. (Durch dieses Kriterium werden in der Regel insbesondere auch sehr kurze Fenster eliminiert.) Es ist aber durchaus möglich, alle im ersten Schritt ermittelten Fenster W 1, W2, W3, ..., Wn für die Pegelregelung zu verwenden.

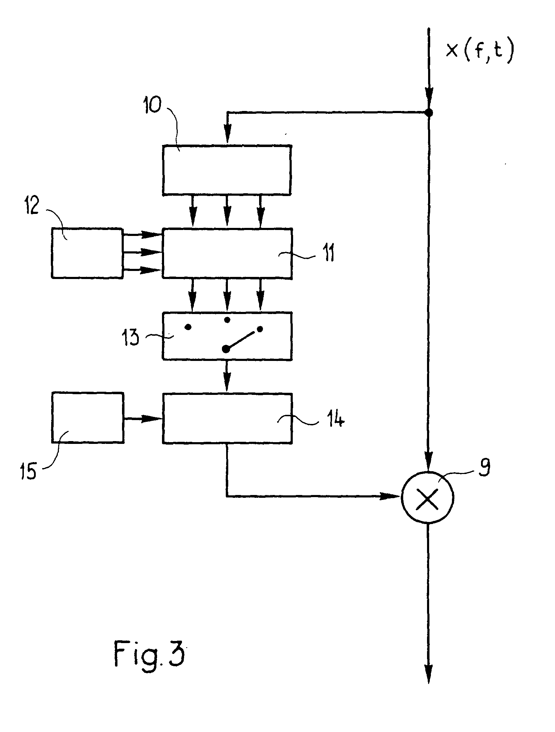

Im Beispiel gemäss Fig. 2c sind die ausgewählten Fenster mit V1, ..., VN-1, VN bezeichnet. Für jedes dieser Fenster werden - neben den charakteristischen spektralen Werten des Testsignals - der zeitliche Beginn und das Ende (bzw. die Dauer) abgespeichert. Damit ist die vorbereitende Phase abgeschlossen. Die genannten Daten werden im Rahmen der erfindungsgemässen Pegelregelung in der anhand der Fig. 3 erläuterten Weise eingesetzt.

Das in Fig. 3 gezeigte Blockschaltbild symbolisiert den Inhalt des in Fig. 1 gezeigten Blockes 6. Das aufbereitete Empfangssignal x(f,t) wird vor der Verstärkung 9 abgegriffen und einer Fensterextraktion 10 zugeführt. Diese extrahiert die in die vorgegebenen Fenster V1, ..., VN-1, VN fallenden Abschnitte des Empfangssignal x(f,t). Die nachfolgende Signalanalyse beschränkt sich gemäss der Erfindung auf die genannten Abschnitte. Das heisst, für jeden ausgewählten Signalabschnitt wird eine selektive (quasi "lokale") Qualitätsbeurteilung 11 durchgeführt. Die Qualitätsbeurteilung 11 arbeitet in gleicher Weise wie die nach der Pegelregelung 6 folgende "globale" Qualitätsbeurteilung 7 (vgl. Fig. 1). Es können bekannte Verfahren zur Anwendung kommen, wie z.B. die BSD- oder die Cepstral-Methode.

Die selektive Qualitätsbeurteilung 11 stützt sich auf die im Referenzspeicher 12 enthaltenen Werte des unverzerrten Testsignals. Am Ausgang der Qualitätsbeurteilung 11 steht für jedes vorgegebene Fenster V1, ..., VN-1, VN mindestens ein Wert zur Verfügung. Dieser charakterisiert die Ähnlichkeit des Empfangssignals x(f, t) mit dem ursprünglichen Testsignal im jeweiligen Fenster. War z.B. während der Übertragung ein kurzer Unterbruch in einem bestimmten Fenster, z.B. in V1, dann wird die Ähnlichkeit in diesem Fenster gering sein.

In der nachfolgenden Selektionsschaltung 13 wird das Fenster mit dem grössten Ähnlichkeitswert bestimmt. Im Prinzip können auch all jene Fenster selektiert werden, deren Ähnlichkeitwert eine vorgegebene Schwelle übersteigt. Immer wenn (mindestens) ein Fenster mit einem Signalabschnitt ausreichender Qualität (Qi > Qmin) gefunden wird, wird in diesem Fall der Verstärkungsfaktor angepasst. (Bei ungenügender Qualität wird der bisherige Verstärkungsfaktor beibehalten.)

In der nachfolgenden Pegelkorrektur 14 wird nach einer an sich bekannten Formel der Verstärkungsfaktor berechnet, z.B. L = 20*log(Eref/Esig), wobei "Eref" den abgespeicherten Referenzwert und "Esig" die empfangene Signalenergie im gegebenen Zeitintervall bezeichnen. Wird in der Selektionsschaltung 13 nur ein einziges Fenster ausgewertet, dann kann für dieses Fenster der empfangene Pegel mit dem Referenzpegel 15 verglichen werden. Werden mehrere Fenster selektiert, dann kann z.B. für jedes einzelne Fenster der erforderliche Verstärkungsfaktor errechnet werden, um dann einen Mittelwert zu bestimmen.

Der auf der Basis eines einzigen Fensters (oder einiger weniger Fenster) gewonnene Verstärkungsfaktor wird gemäss der Erfindung für die Verstärkung des gesamten Signals x(f,t) eingesetzt (Verstärkung 9).

Die Qualitätsbeurteilung 7, welche gemäss der Erfindung auch im Rahmen der Pegelregelung 6 (dort allerdings beschränkt auf ausgewählte Fenster) zur Anwendung kommt, kann in an sich bekannter Weise durchgeführt werden. Im folgenden soll beispielhaft ein geeignetes Verfahren kurz beschrieben werden.

Das Bark Spektrum L(i) spiegelt die nichtlinearen Transformationen von Frequenz und Amplitude des menschlichen Ohrs wieder zusammen mit wichtigen Aspekten der Frequenzanalyse und spektralen Integrationseigenschaften bei komplexen akustischen Ereignissen. Gemäss der vorliegenden Ausführungsform wird die quadratische Euklidische Distanz zwischen zwei Bark-Spektralvektoren bestimmt. Dieser als BSD (engl. Bark Spectral Distortion) bekannte Wert kann durch folgende Formeln beschrieben werden:

$$BSD = BSD_u / E_{Bark}$$

$$BSD_u = Ave\left[BSD^{(k)}\right]$$

$$E_{Bark} = Ave_k \sum_{i=1}^{N}\left[L_X^{(k)}(i)\right]^2$$

$$BSD^{(k)} = \sum_{i=1}^{N}\left[L_X^{(k)}(i) - L_Y^{(k)}(i)\right]^2$$

Dabei bezeichnen

$$L_X^{(k)}(i), L_Y^{(k)}(i)$$

das Barkspektrum des k-ten Segments des Testsignals bzw. des entsprechenden Segments des übertragenen Empfangssignal. (Weitere Einzelheiten zur BSD-Methode können dem eingangs zitierten Stand der Technik von Shihua Wang et al. entnommen werden.)

Die Erfindung beschränkt sich nicht auf die Beurteilung der Übertragungsqualität von Sprachsignalen. Vielmehr ist sie überall dort anwendbar, wo ein bekanntes Testsignal über eine Übertragungsstrecke mit ausgeprägten nichtlinearen Verzerrungen übertragen und anschliessend qualitativ beurteilt wird. Zu erwähnen sind z.B. Systeme zur Übertragung von Bildern.

Ein Merkmal der Erfindung ist die Unterteilung des Testsignals in eine Mehrzahl von kleinen Fenstern und die Berechnung der Übertragungsqualität in diesen ausgewählten Fenstern. Das Fenster mit der besten Übertragungsqualität dient zur Ermittlung der Lautstärke des gesamten Empfangssignals. Signalabschnitte mit geringer Leistung (wie z.B. Sprechpausen in Sprachsignalen oder Bildbereiche ohne Struktur in Bildsignalen) werden bei der Pegelregelung nicht berücksichtigt. (Zur Vermeidung von Missverständnissen wird darauf hingewiesen, dass in der Qualitätsbeurteilung 7 selbstverständlich das gesamte Signal - und nicht nur die ausgewählten Fenster - berücksichtigt wird.)

Innerhalb der erfindungsgemässen Pegelregelung kann eine provisorische und auf die ausgewählten Fenster bezogene Angleichung der Pegel durchgeführt werden. Falls es das Vergleichsverfahren zulässt, kann auf eine Angleichung der Pegel in diesem Rahmen verzichtet werden.

Zusammenfassend ist festzustellen, dass durch die Erfindung ein systematischer Fehler der bisherigen Qualitätsbeurteilung beseitigt wird.

## Patentansprüche

1. Verfahren zur Durchführung einer Qualitätsbeurteilung einer Signalübertragungsstrecke (2) mit nichtlinearen Verzerrungen, wobei ein vorgegebenes Testsignal von einem Sender (1) zu einem Empfänger (3) übertragen wird, im Empfänger (3) zunächst der Pegel des Empfangssignals eingestellt und anschliessend mit einem vorgegebenen Vergleichsverfahren eine globale Qualitätsbeurteilung durchgeführt wird, **dadurch gekennzeichnet, dass** zum Einstellen des Pegels

   a) in einer vorgegebenen Anzahl von verschiedenen, vordefinierten, zeitlichen Fenstern (V1, ..., VN-1, VN) eine auf dem vorgegebenen Vergleichsverfahren beruhende lokale Qualitätsbeurteilung (11) durchgeführt wird, dass
   b) mindestens ein Fenster mit einer ausreichenden lokalen Übertragungsqualität ermittelt wird, dass
   c) das Verhältnis des Signalpegels des Testsignals zum Signalpegel des Empfangssignals in mindestens einem der ermittelten Fenster berechnet wird und dass
   d) der Pegel des ganzen Empfangssignals auf der Basis des genannten Verhältnisses eingestellt wird.

2. Verfahren nach Anspruch 1, **dadurch gekennzeichnet, dass** nur diejenigen Fenster für die Pegelregelung benutzt werden, in welchen die spektrale Energiedichte des Testsignals eine vorgegebene Schwelle überschreitet.

3. Verfahren nach Anspruch 2, **dadurch gekennzeichnet, dass** die Schwelle so gewählt ist, dass die ausgewählten Fenster zusammen mindestens 50% der gesamten Signalenergie des Testsignals enthalten.

4. Verfahren nach einem der Ansprüche 1 bis 3, **dadurch gekennzeichnet, dass** als Testsignal ein Sprachsignal verwendet wird, und dass die ausgewählten Fenster frei von Sprechpausen sind.

5. Verfahren nach einem der Ansprüche 1 bis 4, **dadurch gekennzeichnet, dass** die Übertragungsqualität gemäss der BSD-Methode bestimmt wird.

6. Vorrichtung mit einem Sender und einem Empfänger zur Durchführung des Verfahrens nach Anspruch 1, wobei ein vorgegebenes Testsignal vom Sender über eine Signalübertragungsstrecke übertragen und vom Empfänger als Empfangssignals empfangen wird, wobei der Empfänger eine Pegelregelung zum Einstellen des Pegels des Empfangssignals und eine Qualitätsbeurteilung umfasst, **dadurch gekennzeichnet, dass** die Pegelregelung

a) eine Schaltung zur Durchführung einer lokalen Qualitätsbeurteilung in einer vorgegebenen Anzahl von verschiedenen, vordefinierten, zeitlichen Fenstern,
b) eine Schaltung, um mindestens ein Fenster mit einer ausreichenden lokalen Übertragungsqualität zu ermitteln,
c) eine Schaltung zum Berechnen des Verhältnisses des Signalpegels des Testsignals zum Signalpegel des Empfangssignals in mindestens einem der ermittelten Fenster,
d) eine Verstärkung (9), welche den Pegel des ganzen Empfangssignals auf der Basis des genannten Verhältnisses einstellt, umfasst.

**Claims**

1. Method for performing a quality assessment of a signal transmission link (2) having non-linear distortion, in which a predetermined test signal is transmitted from a transmitter (1) to a receiver (3), the level of the received signal is first adjusted in the receiver and then a global quality assessment is performed by means of a predetermined comparison method, **characterized in that**, for the purpose of adjusting the level,

a) a local quality assessment (11) based on the predetermined comparison method is performed in a predetermined number of different, predefined time windows (V1, ...,VN-1, VN), **in that**
b) at least one window having adequate local transmission quality is determined, **in that**
c) the ratio of the signal level of the test signal to the signal level of the received signal is calculated in at least one windows determined, and **in that**
d) the level of the total received signal is set on the basis of the said ratio.

2. Method according to Claim 1, **characterized in that** only those windows in which the spectral energy density of the test signal exceeds a predetermined threshold are used for the level control.

3. Method according to Claim 2, **characterized in that** the threshold is selected in such a manner that the selected windows together contain at least 50%, preferably about 70% of the total signal energy of the test signal.

4. Method according to one of Claims 1 to 3, **characterized in that** a voice signal is used as a test signal and **in that** the selected windows are free of silence intervals.

5. Method according to one of Claims 1 to 4, **characterized in that** the transmission quality is determined in accordance with the BSD method.

6. Device for carrying out the method according to Claim 1, comprising a receiver for receiving a received signal transmitted from a transmitter via a signal transmission link, the receiver comprising a level control for adjusting the level of the received signal, and a quality assessment, **characterized in that** the level control comprises

a) a circuit for performing a local quality assessment in a predetermined number of different, predefined windows,
b) a circuit for determining at least one window having adequate local transmission quality,
c) a circuit for calculating the ratio of the signal level of the test signal to the signal level of the received signal in at least one window,
d) an amplifier (9) which adjusts the level of the total received signal on the basis of the said ratio.

**Revendications**

1. Procédé pour effectuer une évaluation de qualité d'une liaison de transmission de signal (2) ayant des distorsions non linéaires, dans lequel un signal d'essai prédéfini est transmis par un émetteur (1) vers un récepteur (3), le niveau du signal de réception est d'abord ajusté dans le récepteur (3) et une évaluation de qualité globale est ensuite effectuée à l'aide d'un procédé comparatif prédéfini, **caractérisé en ce que**, pour ajuster le niveau,

a) on procède à une évaluation de qualité locale (11) reposant sur le procédé comparatif prédéfini dans un nombre prédéfini de différentes fenêtres temporelles prédéfinies (V1, ..., VN-1, VN),
b) on détermine au moins une fenêtre ayant une qualité de transmission locale suffisante,
c) on calcule le rapport du niveau du signal d'essai au niveau du signal de réception dans au moins une des fenêtres déterminées, et
d) on ajuste le niveau du signal de réception entier sur la base du rapport cité.

2. Procédé selon la revendication 1, **caractérisé en**

**ce que** l'on n'utilise pour le réglage de niveau que les fenêtres dans lesquelles la densité d'énergie spectrale du signal d'essai dépasse un seuil prédéfini.

3. Procédé selon la revendication 2, **caractérisé en ce que** l'on choisit le seuil de sorte que les fenêtres choisies contiennent ensemble au moins 50 % de l'énergie totale du signal d'essai.

4. Procédé selon l'une quelconque des revendications 1 à 3, **caractérisé en ce que** l'on utilise comme signal d'essai un signal vocal et **en ce que** les fenêtres choisies sont exemptes de pauses vocales.

5. Procédé selon l'une quelconque des revendications 1 à 4, **caractérisé en ce que** la qualité de transmission est déterminée selon la méthode BSD.

6. Dispositif comprenant un émetteur et un récepteur pour la mise en oeuvre du procédé selon la revendication 1, dans lequel un signal d'essai prédéfini est émis par l'émetteur via une liaison de transmission de signal et reçu par le récepteur comme signal de réception, le récepteur comprenant un réglage de niveau pour ajuster le niveau du signal de réception et une évaluation de qualité, **caractérisé en ce que** le réglage de niveau comprend :

   a) un circuit pour effectuer une évaluation de qualité locale dans un nombre prédéfini de différentes fenêtres temporelles prédéfinies,
   b) un circuit pour déterminer au moins une fenêtre ayant une qualité de transmission locale suffisante,
   c) un circuit pour calculer le rapport du niveau du signal d'essai au niveau du signal de réception dans au moins une des fenêtres déterminées, et
   d) une amplification (9) qui ajuste le niveau du signal de réception entier sur la base du rapport cité.

Fig.1

Fig. 2

EP 0 946 015 B1

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0722164 A1

- EP 0644674 A2

### In der Beschreibung aufgeführte Nicht-Patentliteratur

- **SHIHUA WANG.** An Objective Measure for Predicting Subjective Quality of Speech Coders. *IEEE Journal on Selected Areas in Communications,* Juni 1992, vol. 10 (5), 819-829